# DEMANDE DE BREVET EUROPEEN

(11) **EP 1 481 845 A1**
(43) Date de publication de la demande: **01.12.2004**
(21) Numéro de dépôt: 04291323.6
(22) Date de dépôt: 25.05.2004
(51) Int. Cl.: B60Q 1/04

(54) **Boîtier d'électronique et projecteur de véhicule automobile à circuit électronique**

(30) Priorité: 26.05.2003 FR 0306356
(71) Demandeur: VALEO VISION, 93012 Bobigny Cédex (FR)
(72) Inventeur: Bariller, Florian, 49100 Angers (FR)
(74) Mandataire: Renous Chan, Véronique

(57) **Abrégé**

La présente invention concerne un boîtier d'électronique (50) comprenant un organe de fixation destiné à sa fixation à l'extérieur d'un boîtier d'optique (10) d'un projecteur et contenant au moins un circuit électronique de commande (60) d'au moins une fonction du projecteur, ce circuit étant destiné à être connecté électriquement à au moins un composant interne du boîtier d'optique (10) au moyen d'un connecteur (56) disposé sur une des faces dite face arrière (55) de ce boîtier d'électronique.
Selon l'invention, ce connecteur (56) est disposé dans une partie saillante de cette face arrière et portant ledit organe de fixation.

## Description

La présente invention concerne un projecteur de véhicule automobile à circuit électronique.

La présente invention concerne les projecteurs de véhicules automobiles.

De nos jours, un projecteur se voit équipé de façon de plus en plus fréquente et importante d'un certain nombre de composants électriques et électroniques, destinés à la gestion d'un certain nombre de fonctions incorporées dans le projecteur. Parmi ces fonctions, on peut citer:
- la commande multiplexée de l'allumage et de l'extinction des lampes des dispositifs d'éclairage et de signalisation des véhicules, selon laquelle un bus, acheminant une tension continue d'alimentation des lampes (par exemple +12 volts) et des signaux de commande, permet l'ouverture/fermeture d'un interrupteur électronique (par exemple transistor de puissance) associé à chaque lampe et permettant de l'alimenter sélectivement ;
- l'élaboration des hautes tensions nécessaires à l'amorçage et le maintien des lampes à décharge, que l'on tend actuellement à utiliser dans les projecteurs en raison de leur bon rendement ;
- la commande de moteurs électriques destinés à faire varier l'orientation verticale et/ou horizontale du réflecteur du projecteur, notamment en vue d'adapter l'orientation du faisceau à des variations d'assiette du véhicule et/ou de remplir la fonction DBL (en anglais Dynamic Bending Light) à savoir le suivi des courbes de la route par le faisceau ;
- la commande de moteurs électriques animant des balais de nettoyage des glaces de projecteurs ;
- la commande de moteurs électriques animant des pompes pour la projection de liquide de lavage sur les glaces des projecteurs.

La liste ci-dessus n'est bien entendu pas limitative, d'autres fonctions, existantes ou à créer, nécessitant l'usage de composants électroniques, pouvant être envisagées.

Ainsi le coût des moyens électroniques d'un projecteur tend à l'heure actuelle à devenir comparable, voire supérieur, au coût des parties optiques conventionnelles.

Et à l'heure actuelle, les projecteurs équipés de tels moyens sont réalisés d'une manière telle qu'une dégradation du projecteur, par exemple à l'occasion d'un accident de la circulation, implique le remplacement de toutes ses parties, mécaniques, optiques et électroniques.

Par ailleurs, lors d'une défaillance des moyens électroniques, il est nécessaire de procéder à des opérations de démontage, extraction du ou des composants défectueux, mise en place du ou des composants de remplacement puis remontage, qui peuvent s'avérer extrêmement fastidieuses.

Il a donc été proposé dans le document de brevet FR 2 685 439 un projecteur de véhicule automobile schématisé sur la figure 1, du type comprenant un boîtier 10, une glace 40 et deux réflecteurs 30a et 30b et deux lampes 20, une lampe à filament conventionnelle 20b et une lampe à décharge 20a, montés dans le boîtier, ainsi qu'un circuit électronique de commande d'au moins une fonction du projecteur, ledit boîtier constituant un boîtier d'optique et le circuit électronique étant monté dans un boîtier d'électronique 50a séparé fixé de façon amovible sur une région arrière du boîtier d'optique 10, à l'extérieur de celui-ci. Le boîtier d'électronique 50a peut être fixé sur le boîtier d'optique 10 par vissage et/ou clipsage, de manière à pouvoir facilement être démonté en vue du remplacement de la circuiterie électronique fixée dans le boîtier d'électronique.

Selon un mode de réalisation décrit dans ce document, le boîtier d'électronique 50a vient prendre place dans une ouverture prévue dans la face arrière du boîtier d'optique 10. La connexion électrique entre la circuiterie électronique contenue dans le boîtier d'électronique 50a et la ou les lampe(s) 20a, 20b du projecteur peut être assurée dans cette configuration par un connecteur 56 débouchant à partir du boîtier d'électronique 50a dans l'espace intérieur du boîtier d'optique 10, ceci avec un câblage approprié.

C'est alors pratiquement tout le boîtier d'électronique 50a qui est introduit dans le boîtier d'optique 10 jusqu'à butée d'une plaque frontale 52 contre celui-ci et vissage ou clipsage des bords de cette plaque frontale en au moins deux points.

Selon cet art antérieur, le boîtier d'électronique occupe une place relativement importante à l'intérieur du boîtier d'optique ce qui limite les possibilités de disposition d'autres composants ou implique un dimensionnement de ce dernier en conséquence.

L'invention résout ce problème tout en assurant une fixation amovible particulièrement simple et rapide.

Pour ce faire, elle propose un boîtier d'électronique comprenant un organe de fixation destiné à sa fixation à l'extérieur d'un boîtier d'optique d'un projecteur et contenant au moins un circuit électronique de commande d'au moins une fonction du projecteur, ce circuit étant destiné à être connecté électriquement à au moins un composant interne du boîtier d'optique au moyen d'un connecteur disposé sur une des faces dite face arrière de ce boîtier d'électronique, caractérisé en ce que ce connecteur est disposé dans une partie saillante de cette face arrière et portant ledit organe de fixation.

Par composant interne du boîtier d'optique est entendu tout composant dont la fonction est commandée par les moyens électroniques, à savoir par exemple les lampes, le réflecteur, etc. comme il sera explicité plus loin.

De préférence, ledit organe de fixation permet une fixation amovible ; notamment afin de permettre le remplacement/ la réparation du boîtier électronique, ou de réutiliser ce dernier si le reste du dispositif d'éclairage est détérioré.

Selon un mode de réalisation préféré, ladite partie saillante est une bride annulaire portant sur sa face externe ledit organe de fixation.

Avantageusement, ledit organe de fixation est constitué d'ergots à pans inclinés.

Le boîtier d'électronique peut comporter un joint autour de ladite partie saillante, ce joint pouvant être surmoulé. On privilégie cette solution quand on utilise un boîtier en matériau thermoplastique. Sinon, on peut utiliser des joints standard amovibles.

Le boîtier conforme à l'invention peut abriter un circuit électronique pour la commande d'au moins une fonction du projecteur choisie dans le groupe comprenant l'amorçage et le maintien d'une lampe à arc, la mise en-et hors-service d'une lampe par un interrupteur électronique à semi-conducteur, le réglage motorisé de l'orientation d'un faisceau engendré par le projecteur, l'entraînement motorisé d'un balai de nettoyage de la glace, l'entraînement motorisé d'une pompe pour liquide de lavage de la glace.

L'invention concerne également un projecteur de véhicule automobile, du type comportant un boîtier dit boîtier d'optique, une glace, au moins un réflecteur et une lampe montés dans le boîtier et portant un organe de fixation complémentaire à celui d'un boîtier d'électronique selon l'une des revendications précédentes, cet organe de fixation complémentaire étant disposé sur la périphérie d'un orifice agencé dans le boîtier d'optique, caractérisé en ce que ledit orifice est destiné à recevoir ladite partie saillante.

Selon un mode de réalisation préféré, ledit orifice est circulaire.

Avantageusement, ledit organe de fixation complémentaire est un agencement de verrouillage baïonnette.

On peut de cette manière, par exemple lors d'un accident ou d'une défaillance, ne remplacer que les parties touchées du véhicule (optique ou électronique) de façon particulièrement simple, avec en conséquence une diminution du coût de réparation.

Le boîtier d'électronique conforme à l'invention est particulièrement compact et sa fixation ne nécessite aucune pièce complémentaire de type vis.

L'intégration du connecteur dans la partie saillante de connexion mécanique sur le même boîtier permet par un seul orifice la connexion électrique et la connexion mécanique et limite le nombre de faisceaux traversant le boîtier d'optique.

L'invention concerne enfin un véhicule automobile équipé d'un tel projecteur.

L'invention est décrite ci-après plus en détail à l'aide de figures ne représentant qu'un mode de réalisation préféré de l'invention.

La figure 1 déjà commentée représente une vue en coupe verticale schématique d'un projecteur selon une forme de réalisation de l'art antérieur.

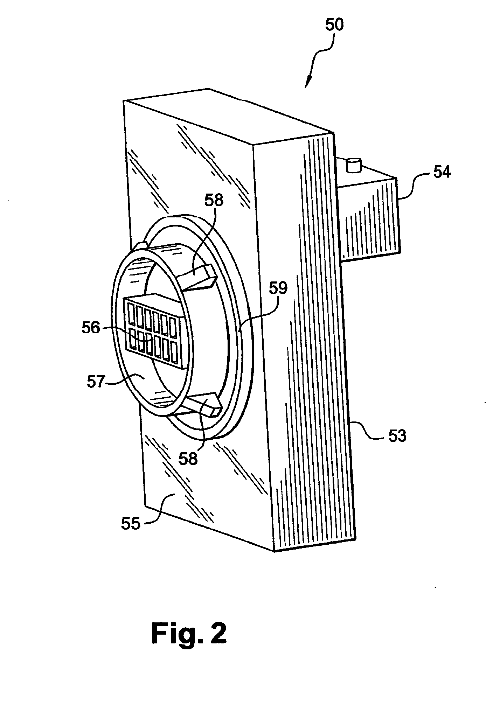

La figure 2 est une vue en perspective d'un boîtier d'électronique conforme à l'invention.

La figure 3 est une vue schématique en coupe d'un tel boîtier monté sur un projecteur.

On notera que des éléments ou parties identiques ou similaires ont été désignés par les mêmes signes de référence sur les différentes figures.

Le boîtier d'électronique 50 conforme à l'invention est de forme générale parallélépipédique et comporte sur sa face 53 dite face avant un connecteur d'alimentation 54 destiné à être relié à la batterie du véhicule automobile. Ce boîtier 50 peut être en matière plastique.

Sur sa face opposée dite face arrière 55, il comprend un connecteur 56 destiné à la connexion électrique avec un composant interne, en général une lampe, du boîtier d'optique sur lequel il est destiné à être monté de façon amovible. Ce connecteur 56 est disposé dans une partie saillante de cette face arrière formé ici d'une bride annulaire 57 et portant un organe de fixation amovible destiné au montage du boîtier 50 sur le boîtier d'optique du projecteur. Plus précisément, la bride 57 porte cet organe de fixation sur sa face externe et cet organe de fixation est constitué d'ergots à pans inclinés 58 répartis sur cette face. Un joint d'étanchéité 59 est disposé autour de la bride 57, surmoulé dans le boîtier lorsque ce dernier est en matière thermoplastique. Ce joint est un joint classique amovible lorsque le boîtier est en métal.

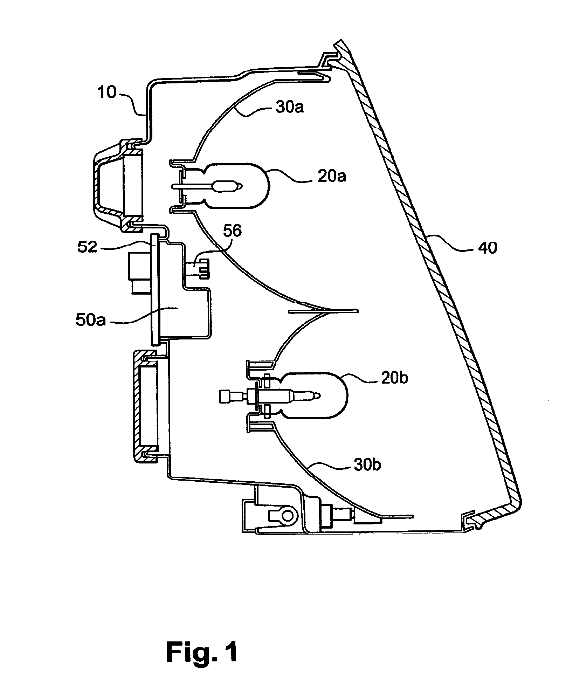

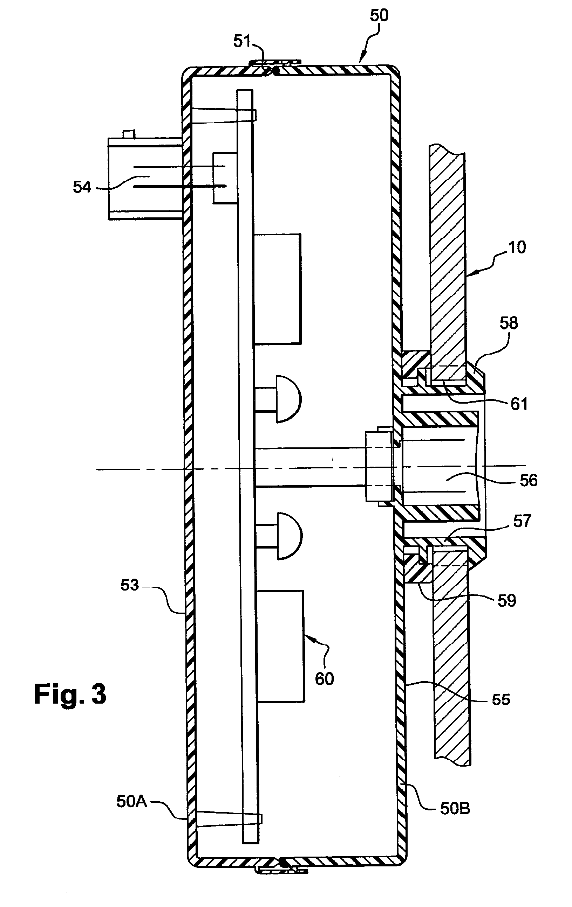

Sur la figure 3, ce boîtier 50 est monté sur la paroi arrière d'un boîtier d'optique 10 tel que celui représenté sur la figure 1. Ce boîtier 10 abrite seulement les composants optiques et mécaniques associés (lampes, réflecteurs, dispositifs de réglage d'orientation de faisceau, etc...).

Le boîtier d'électronique 50 contient un circuit électronique 60 monté sur une carte pour la commande d'au moins une fonction du projecteur choisie dans le groupe comprenant l'amorçage et le maintien d'une lampe à arc, la mise en- et hors-service d'une lampe par un interrupteur électronique à semi-conducteur, le réglage motorisé de l'orientation d'un faisceau engendré par le projecteur, l'entraînement motorisé d'un balai de nettoyage de la glace, l'entraînement motorisé d'une pompe pour liquide de lavage de la glace

Il est constitué de deux demi-boîtiers en matière plastique, un avant 50A et un arrière 50B reliés par clipsage avec interposition d'un joint 51.

Le montage s'effectue par introduction de la bride annulaire 57 du boîtier d'électronique 50 dans un orifice circulaire 61 agencé dans la paroi arrière du boîtier d'optique 10 qui comporte un organe de fixation complémentaire à celui du boîtier d'électronique 50 et disposé sur la périphérie de l'orifice 61 sur la face interne du boîtier d'optique 10. Cet organe de fixation complémentaire n'est pas représenté en détail sur la figure 3 mais est constitué de préférence d'un agencement de verrouillage baïonnette coopérant avec les ergots 58 du boîtier d'électronique 50. Un tel agencement de verrouillage baïonnette est bien connu et décrit par exemple dans les documents de brevet WO 01/17068 ou EP 0 457 525. Avantageusement, il est utilisé un verrouillage baïonnette quart de tour.

Le joint 59 est alors comprimé entre les deux boîtiers 10, 50 et assure l'étanchéité pour éviter la pénétration d'eau ou de poussière dans l'optique ou dans l'électronique.

Dans cette position montée, le connecteur d'alimentation 54 peut être connecté par un faisceau à la batterie du véhicule et le connecteur arrière 56 peut être connecté par un câble à la ou aux lampe(s) du projecteur.

Cette dernière connexion peut se faire manuellement lors de l'équipement du projecteur, de façon particulièrement simple par coopération d'un connecteur complémentaire au connecteur arrière 56.

L'invention a également pour avantage de permettre une connexion mécanique et une connexion électrique du boîtier d'électronique 50 et du boîtier d'optique 10 de façon automatique simultanée ou quasi-simultanée.

Il est possible en effet d'équiper le projecteur dans le boîtier d'optique 10 d'une connexion électrique complémentaire du connecteur 56 et se connectant automatiquement avec le connecteur arrière 56 lors du montage mécanique du boîtier d'électronique 50 sur le boîtier d'optique 10. Ce type de connexion électrique par rotation est par exemple de type à contacts circulaires glissants. Ainsi, par une manipulation unique, le boîtier est monté complètement.

Bien que l'on ait décrit ci-dessus des projecteurs comportant des moyens électroniques logés dans un boîtier d'électronique 50 unique, on peut bien entendu prévoir sur un même projecteur plusieurs boîtiers d'électronique recevant chacun des moyens électroniques associés à une ou plusieurs fonctions spécifiques. Inversement, un seul boîtier électronique selon l'invention peut commander le fonctionnement de plusieurs éléments du projecteur, notamment plusieurs associations réflecteur- lampe, ou une association réflecteur-lampe et la commande d'un lave glace. Le boîtier électronique peut aussi commander à la fois la correction d'assiette du projecteur (correction dans un plan vertical) et la mobilité du faisceau dans un plan horizontal, en commandant le mouvement dans ces deux plans des blocs optiques réflecteur-lampe des projecteurs.

## Revendications

1. Boîtier d'électronique (50) comprenant un organe de fixation destiné à sa fixation à l'extérieur d'un boîtier d'optique (10) d'un projecteur et contenant au moins un circuit électronique de commande (60) d'au moins une fonction du projecteur, ce circuit étant destiné à être connecté électriquement à au moins un composant interne du boîtier d'optique (10) au moyen d'un connecteur (56) disposé sur une des faces dite face arrière (55) de ce boîtier d'électronique, **caractérisé en ce que** ce connecteur (56) est disposé dans une partie saillante de cette face arrière et portant ledit organe de fixation.

2. Boîtier selon la revendication 1, **caractérisé en ce que** ledit organe de fixation permet une fixation amovible.

3. Boîtier selon la revendication 1 ou 2, **caractérisé en ce que** ladite partie saillante est une bride annulaire (57) portant sur sa face externe ledit organe de fixation.

4. Boîtier selon la revendication 3, **caractérisé en ce que** ledit organe de fixation est constitué d'ergots (58) à pans inclinés.

5. Boîtier selon l'une des revendications précédentes, **caractérisé en ce qu'**il comporte un joint (59) autour de ladite partie saillante (57).

6. Boîtier selon la revendication 5, **caractérisé en ce que** ledit joint (59) est surmoulé.

7. Boîtier selon l'une des revendications 1 à 6, **caractérisé en ce qu'**il abrite un circuit électronique (60) pour la commande d'au moins une fonction du projecteur choisie dans le groupe comprenant l'amorçage et le maintien d'une lampe à arc, la mise en- et hors-service d'une lampe par un interrupteur électronique à semi-conducteur, le réglage motorisé de l'orientation d'un faisceau engendré par le projecteur, l'entraînement motorisé d'un balai de nettoyage de la glace, l'entraînement motorisé d'une pompe pour liquide de lavage de la glace.

8. Projecteur de véhicule automobile, du type comportant un boîtier dit boîtier d'optique (10), une glace, au moins un réflecteur et une lampe montés dans le boîtier et portant un organe de fixation complémentaire à celui d'un boîtier d'électronique selon l'une des revendications précédentes, cet organe de fixation complémentaire étant disposé sur la périphérie d'un orifice (61) agencé dans le boîtier d'optique (10), **caractérisé en ce que** ledit orifice (61) est destiné à recevoir ladite partie saillante (57).

9. Projecteur selon la revendication 8, **caractérisé en ce que** ledit orifice (61) est circulaire.

10. Projecteur selon la revendication 9, **caractérisé en ce que** ledit organe de fixation complémentaire est un agencement de verrouillage baïonnette.

11. Véhicule automobile équipé d'un projecteur selon l'une des revendications 8 à 10.
